# EUROPÄISCHE PATENTSCHRIFT

(11) **EP 3 180 970 B1**
(45) Veröffentlichungstag und Bekanntmachung des Hinweises auf die Patenterteilung: **29.09.2021**
(21) Anmeldenummer: 16401075.3
(22) Anmeldetag: 26.10.2016
(51) Int. Cl.: A01B 79/00, A01C 21/00, A01C 17/00

(54) **VERFAHREN ZUM BETREIBEN EINER VERTEILMASCHINE**
METHOD FOR OPERATING A DISTRIBUTOR
PROCÉDÉ DE FONCTIONNEMENT D'UNE MACHINE À RÉPARTIR

(30) Priorität: 02.11.2015 DE 102015118733
(43) Veröffentlichungstag der Anmeldung: 21.06.2017
(73) Patentinhaber: Amazonen-Werke H. Dreyer SE & Co. KG, 49205 Hasbergen (DE)
(72) Erfinder: Sia, Tim-Randy, 49179 Ostercappeln (DE); Kühn, Christoph, 49080 Osnabrück (DE)

(56) Entgegenhaltungen:
- DE-A1- 19 619 162
- DE-A1- 19 652 907
- DE-A1-102011 050 474

## Beschreibung

Die Erfindung betrifft ein Verfahren zum Betreiben einer Verteilmaschine gemäß des Oberbegriffs des Patentanspruchs 1.

Ein derartiges Verfahren ist beispielsweise durch die EP 0 916 245 B1 oder die DE10 2011 050 474 A1 offenbart.

Bei diesem Verfahren wird der Ausbringvorgang mittels eines Bordcomputersystems überwacht, aufgezeichnet und mit den Sollwerten, welche in einer Applikationskarte hinterlegt sind, verglichen. Die Daten werden dann zur weiteren Datenanalyse auf einen separaten PC übertragen, um hieraus angepasste Applikationskarten zu generieren, welche bei einem erneuten Bearbeiten der Fläche für die Bearbeitung herangezogen werden können. Der Stand der Technik trifft jedoch keine Aussage darüber, wie Grenz- und Randflächen möglichst effektiv bewirtschaftet werden können.

Die Aufgabe der vorliegenden Erfindung ist es dementsprechend eine möglichst effektive und einfache Bearbeitung von Grenz- und Randflächen mittels landwirtschaftlicher Verteilmaschinen zu ermöglichen.

Diese Aufgabe wird erfindungsgemäß durch den kennzeichnenden Teil des Anspruchs 1 gelöst, wobei die Steuervorrichtung der Verteilmaschine dazu ausgebildet ist, die ersten und zweiten Verteilorgane zur Verteilung von landwirtschaftlichem Gut anzusteuern und zu betreiben und die Ansteuerung und der Betrieb der ersten und zweiten Verteilorgane ortsabhängig entsprechend einer in dem Speicher der Steuereinheit hinterlegten Bearbeitungskarte erfolgt. Bei den ersten Verteilorganen kann es sich um Vorrichtungen zur Verteilung von landwirtschaftlichem Gut, beispielsweise Schleuderscheiben oder Sprühdüsen handeln, während es sich bei den zweiten Verteilorganen vorzugsweise um Vorrichtungen zum angepassten Verteilen des landwirtschaftlichen Guts in Grenz- oder Randnähe der landwirtschaftlichen Fläche, beispielsweise einen Grenzstreuschirm oder eine angepasste Wurfschaufel bei einem Düngerstreuer oder eine spezielle Sprühdüse für die Randbehandlung bei einer Feldspritze, handelt. Es können jedoch auch zumindest zwei gleichartige Verteilorgane vorliegen, wobei beispielsweise ein zweites dieser beiden gleichartigen Verteilorgane in für die Behandlung von Grenz- und Randbereichen angepasster Weise betrieben wird. Beispielsweise kann in Randnähe der landwirtschaftlichen Fläche die äußere Schleuderscheibe eines Düngerstreuers mit reduzierter Drehzahl betrieben werden, um die Wurfweite zu reduzieren.

Der Landwirt kann nun im Vorfeld des Verteilprozesses eine Bearbeitungsstrategie der landwirtschaftlichen Fläche hinsichtlich der Grenz- und Randbehandlung mittels einer Software festlegen. Diese wird dann bei der eigentlichen Bearbeitung des Feldes durch die Steuervorrichtung automatisiert abgearbeitet. Das automatisierte Abarbeiten von Grenz- und Randstreuprozessen ermöglicht eine sehr viel größere Präzisierung der Verteilung von landwirtschaftlichem Gut. Da diese Verteilvorgänge sehr strikten Umweltauflagen unterliegen ist eine große Sorgfalt insbesondere bei der Bearbeitung derartiger Bereiche landwirtschaftlicher Flächen notwendig. Vorteilhaft ist es nun die sorgsam durch den Landwirt gewählten Einstellparameter während des Bearbeitungsprozesses anhand einer zuvor hinterlegten Bearbeitungskarte automatisiert aufzurufen. Diese Bearbeitungskarte kann beispielsweise im Vorfeld des Bearbeitungsprozesses durch den Landwirt an einem PC, Tablet oder einer anderen geeigneten Datenverarbeitungseinrichtung erstellt, gespeichert und zur Verwendung durch die landwirtschaftliche Verteilmaschine auf diese übertragen oder alternativ direkt an einem Terminal der Verteilmaschine im Vorfeld der Feldarbeit erstellt werden.

In einer solchen Bearbeitungskarte sind gesetzliche Abstandsauflagen, welche bei der Verteilung von potentiell umwelt-/ oder gewässergefährdenden Stoffen, wie Pflanzenschutz- oder Düngemitteln, eingehalten werden müssen, berücksichtigt. Das bedeutet, dass je nach auszubringendem Gut ein bestimmter Abstand zu angrenzenden Flächen bzw. Gewässern bei der Verteilung eingehalten werden muss, da beispielsweise Spritzmittel und Düngemittel nicht mit beliebiger Präzision bis an die Feldgrenze heran verteilt werden können. So kann Windeinfluss dazu führen, dass Pflanzenschutzmittel oder Düngemittel über die Feldgrenze hinweg getragen werden. Auch ist wegen intrinsischer Effekte der jeweiligen Verteilmaschine, wie dem Öffnungswinkel der Sprühdüsen und dem Verrollen und Verspringen von Düngerkörnern eine beliebig exakte Verteilung des auszubringenden Guts nicht möglich.

Spezielle Verteilorgane zur angepassten Verteilung des auszubringenden Guts in Randflächen ermöglichen es hierbei näher an der angrenzenden Fläche zu arbeiten oder eine gleichmäßigere Verteilung zu erreichen.

So sind spezielle Grenzstreuschirme eines Düngerstreuers oder Grenzstreuschaufeln beispielsweise dafür ausgelegt eine geringere Arbeitsbreite einzustellen und/oder einen steileren Abfall der Ausbringmenge in der Nähe der Feldgrenze zu generieren. Letzteres sorgt für eine gleichmäßigere Ausbringrate in Randbereichen des Feldes.

Bei Feldspritzen sorgen spezielle Randdüsen mit einem angepassten, weniger windanfälligen Tropfenspektrum und/oder einem angepassten Sprühwinkel ebenfalls für eine ideale Ausbringung des Mittels in der Nähe von Feldgrenzen.

In einer möglichen Weiterbildung der Erfindung kann der Landwirt bei der Bewirtschaftung durch Steuervorgaben, welche beispielsweise mittels geeigneter Eingabevorrichtungen direkt an die landwirtschaftliche Verteilmaschine übermittelt werden, den Betrieb der einzelnen Verteilorgane während der Feldarbeit individuell steuern, wobei die jeweilige Einstellung georeferenziert gespeichert wird. Bei einem erneuten Anfahren der landwirtschaftlichen Fläche wird nun deren Bearbeitung entsprechend der in dem Speicher hinterlegten Informationen automatisiert und ortsabhängig durchgeführt.

In einer vorteilhaften Weiterbildung der Erfindung wird zudem durch die Steuereinheit die jeweilige Sorte des mittels der Verteilmaschine ausgebrachten Guts zusätzlich zu dem jeweiligen Betrieb der ersten und zweiten Verteilorgane gespeichert und bei einem erneuten Anfahren derselben landwirtschaftlichen Fläche zum Ausbringen desselben Guts erfolgt eine Bearbeitung entsprechend des jeweils georeferenziert für dieses Gut gespeicherten Betriebs der ersten und zweiten Verteilorgane. Auf diese Weise können vorteilhaft automatisiert für verschiedene zu verteilende Güter bei der Bearbeitung Bearbeitungskarten erstellt werden. Bei einem erneuten Anfahren derselben landwirtschaftlichen Fläche können dann die für das auszubringende Gut gespeicherten Bearbeitungsparameter aufgerufen und der Verteilvorgang so automatisiert durchgeführt werden. Hierfür muss dem System im Vorfeld durch manuelle Eingabe an einem mit der Steuervorrichtung verbundenen Terminal oder auf andere Art und Weise die Art des auszubringenden Mittels mitgeteilt werden. Diese Ausgestaltung ist besonders Vorteilhaft, da für verschiedene Arten von auszubringenden Gütern, wie Düngern oder Pflanzenschutzmittel, verschiedene gesetzliche Auflagen zur Bearbeitung von Randbereichen einer landwirtschaftlichen Fläche vorliegen können. Somit muss nicht manuell eine Anpassung der Bearbeitungsparameter vorgenommen werden, falls für verschiedene Güter verschiedene gesetzliche Auflagen vorliegen.

Es kann auch vorgesehen sein, Gruppen von Gütern zu bilden, beispielsweise Herbizide, Fungizide und/oder Düngemittel und die Bearbeitungsparameter des jeweils ausgebrachten Guts für die Gruppe zu speichern, dem das Gut zuzuordnen ist. Auf diese Weise kann für ein anderes Mittel, welches zu derselben Gruppe gehört auf besonders einfache Weise dieselben Betriebsparameter beim Ausbringvorgang verwendet werden. Wird also beispielsweise für ein Mittel A, welches der Gruppe 1 zugeordnet ist mit dem Betriebsparametersatz I gearbeitet, so kann beim Bearbeiten derselben Fläche mit einem Mittel B, welches ebenfalls zur Gruppe 1 gehört, vorgesehen sein, ebenfalls den Betriebsparametersatz I zu verwenden. Die Gruppen können auch jeweils einem oder mehreren Maschinentypen zugeordnet werden, beispielsweise in der Form "Düngemittel, ausgebracht mit einem Düngerstreuer", "Düngemittel, ausgebracht mit einer Feldspritze", "Herbizide, ausgebracht mit einer Feldspritze".

In einer vorteilhaften Weiterbildung der Erfindung werden die beim Bearbeiten der landwirtschaftlichen Fläche aufzurufenden Daten durch die Steuervorrichtung entsprechend geänderter Betriebsparameter der Verteilmaschine, wie geänderte Düngersorte oder geänderter Schleuderscheibentyp oder geänderte Sprühdüse, automatisiert mittels eines Algorithmus angepasst. Auf diese Weise können die Daten zur Bearbeitung von Randflächen einer landwirtschaftlichen Fläche, welche beispielsweise für die Verteilung einer ersten Düngersorte verwendet wurden, auch für eine zweite Düngersorte verwendet werden, auch wenn diese gegenüber der ersten Düngersorte andere Flugeigenschaften aufweist. Sind die Flugeigenschaften beispielsweise in der Steuervorrichtung hinterlegt, so könnte diese mittels eines Algorithmus die Daten der Verteilung konvertieren, so dass bei der Verteilung der zweiten Düngersorte die Verteilorgane entsprechend angesteuert werden. Gleiches gilt beispielsweise für einen geänderten Schleuderscheibentyp bei einem Düngerstreuer oder geänderte Sprühdüsen bei einer Feldspritze. Ebenfalls denkbar ist, dass die Konvertierung mittels eines entsprechenden Graphen oder einer Tabelle erfolgt,

In einer möglichen Weiterbildung der Erfindung werden die für einen Typ von Verteilmaschinen, beispielsweise Düngerstreuer, gespeicherten Informationen bezüglich der angepassten Benutzung von zweiten Verteilorganen in Randbereichen einer landwirtschaftlichen Fläche zur Benutzung bei einer landwirtschaftlichen Maschine anderen Typs, beispielsweise Feldspritzen, automatisiert mittels eines Algorithmus konvertiert. Auf diese Weise muss, wenn entsprechende Verteilcharakteristiken der Verteilmaschinen, insbesondere der zweiten Verteilorgane der Verteilmaschinen, bekannt sind nur ein einziges Mal eine manuelle Einstellung der zweiten Verteilorgane in Randbereichen der landwirtschaftlichen Fläche werden. Dies kann wie bereits besprochen manuell während des Verteilvorganges durch den Landwirt, beispielsweise mittels eines Terminals in der Kabine eines die Verteilmaschine ziehenden oder tragenden Traktors geschehen, oder im Vorfeld des Verteilvorganges durch Erstellen einer für die zu bearbeitende Fläche angepassten Applikationskarte. Das Konvertieren der gespeicherten Bearbeitungsvorschrift auf eine Verteilmaschine anderen Typs, wobei die Bearbeitungsvorschrift entweder während des Verteilvorganges georeferenziert abgespeichert wird oder in Form einer Applikationskarte vorliegt, kann dann durch die Steuervorrichtung anhand hinterlegter Konvertierungsvorschriften in erfindungsgemäßer Weise erfolgen. Dies kann ein entsprechender Algorithmus, eine Tabelle oder ein Graph sein, welche in der Steuervorrichtung hinterlegt sind.

In einer besonders einfachen Ausgestaltung der Erfindung ist vorgesehen, dass die zu wählenden Betriebsparameter dem Benutzer der Verteilmaschine auf einer mit der Steuervorrichtung verbundenen Anzeigevorrichtung angezeigt werden und der Benutzer die notwendigen Anpassungen der Maschineneinstellungen manuell vornimmt. Hierfür werden die gespeicherten Betriebsparameter abgerufen und dem Benutzer in Abhängigkeit der aktuellen Position die jeweils zu verwendenden Betriebsparameter angezeigt. Es kann vorgesehen sein, dass dem Benutzer ebenfalls eine Rückmeldung gegeben wird, wenn die angezeigten Betriebsparameter ordnungsgemäß eingestellt sind.

Weitere Einzelheiten der Erfindung sind der Beispielsbeschreibung und der Zeichnung zu entnehmen.

Die Zeichnung zeigt hierbei schematisch eine landwirtschaftliche Fläche mit angrenzender Wasserfläche, bei der der Randbereich in angepasster Weise bearbeitet wird.

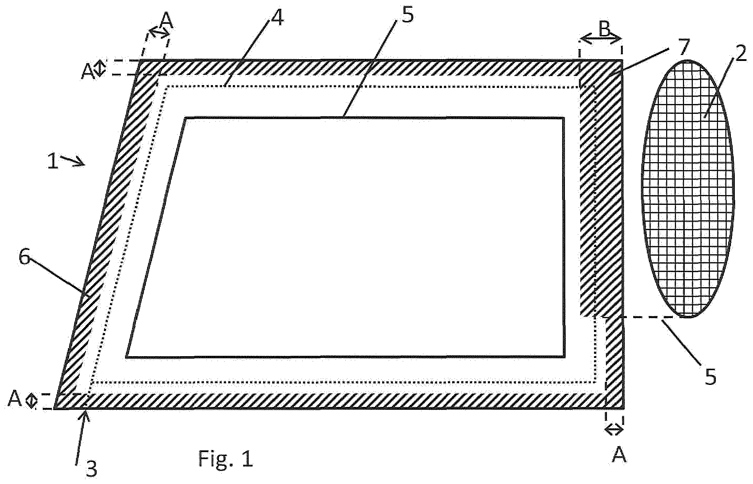

Die Figur zeigt eine landwirtschaftliche Fläche 1 mit angrenzender Wasserfläche 2. Diese Fläche 1 soll mit einer landwirtschaftlichen Verteilmaschine, beispielsweise einem Düngerstreuer bearbeitet werden. Die landwirtschaftliche Verteilmaschine wird in dem vorliegenden Ausführungsbeispiel an der Position 3 in Pfeilrichtung in das Feld bewegt. Zu Beginn der Feldarbeit wird die landwirtschaftliche Fläche von der Verteilmaschine zur Bearbeitung des Randbereiches einmal umrundet. Die jeweilige Mitte der Verteilmaschine bei diesem Umrundungsprozess wird in der Figur 1 durch die gepunktete Linie angegeben. Die Arbeitsbreite des Düngerstreuers in diesem Ausführungsbeispiel erstreckt sich zwischen der Randbegrenzung der landwirtschaftlichen Fläche und der Begrenzung der Zone 5. Hierbei wird der Bereich zwischen der Randbegrenzung der landwirtschaftlichen Fläche und der gestrichelten Linie zumindest überwiegend durch eine erste Schleuderscheibe des Düngerstreuers bei der Umrundung der Fläche bearbeitet, während der Bereich zwischen der gestrichelten Linie und der Begrenzung der Zone 5 zumindest überwiegend durch eine zweite Schleuderscheibe bearbeitet wird.

Je nachdem welcher Art die der landwirtschaftlichen Fläche angrenzenden Flächen sind, also beispielsweise Grünflächen, landwirtschaftliche Flächen oder Wasserflächen, ist die Bearbeitung des Randbereiches entsprechend anzupassen. So können in diesem Ausführungsbeispiel Randbereiche unterschieden werden, wo in einem Abstand A zum Rand der landwirtschaftlichen Fläche kein Dünger ausgebracht werden darf und Randbereiche mit direkt angrenzenden Wasserflächen, wo in einem größeren Abstand B zur Randkontur der landwirtschaftlichen Fläche kein Dünger ausgebracht werden darf.

Generell wird der Bereich der mittels eines zweiten Verteilorgans zur angepassten Verteilung bearbeitet wird als Randgebiet der landwirtschaftlichen Fläche bezeichnet und der Bereich, welcher mittels eines ersten Verteilorgans bearbeitet wird als Kernzone bezeichnet. Hierbei hängt die Breite bzw. Größe der jeweiligen Bereiche von der Art der Verteilmaschine und der jeweiligen Verteilorgane sowie dem auszubringenden Gut ab. Beispielsweise wird im Allgemeinen bei der Bearbeitung mittels eines Düngerstreuers der Randbereich breiter ausfallen als bei einer Feldspritze, da die Düsen zur Bearbeitung von Randbereichen einer Feldspritze das Pflanzenschutzmittel in der Regel sehr viel lokalisierter ausbringen als dies mittels einer Grenz-/ Randstreuvorrichtung bei einem Düngerstreuer möglich ist.

Es muss also je nach Art der angrenzenden Fläche eine angepasste Verteilung des Düngers vorgenommen werden. So kann, wenn die Verteilmaschine aus der Pfeilrichtung 3 kommend in die landwirtschaftliche Fläche hineinfährt und diese in Pfeilrichtung umrundet, zu Beginn eine angepasste Verteilung mittels der ersten Schleuderscheibe nötig sein, um zu verhindern, dass Dünger in den Randbereich 6 der Breite A hinein geworfen wird. Hierfür kann beispielsweise die Drehzahl der Schleuderscheibe entsprechend reduziert und/oder der Auftreffpunkt des Düngers auf die Schleuderscheibe entsprechend angepasst und/oder eine hierfür mitgeführte Vorrichtung, wie eine Grenzstreueinrichtung, verwendet werden.

In der Nähe der Wasserfläche 2 ist nun ein Bereich 7 der Breite B von Dünger frei zu halten, welcher breiter ist als der Bereich 6. Dieser Bereich kann wie in diesem Ausführungsbeispiel so breit sein, dass ebenfalls der Verteilbereich der zweiten Schleuderscheibe hiervon betroffen ist und entsprechend angepasst werden muss. So kann beispielsweise der Verteilvorgang mit der ersten Schleuderscheibe gänzlich gestoppt und der Verteilvorgang mit der zweiten Schleuderscheibe mittels Anpassung des Auftreffpunktes des Düngers und/oder Schleuderscheibendrehzahl und/oder Verwendung einer entsprechenden Vorrichtung für den Verteilvorgang in der Nähe von Randbereichen angepasst werden.

Auch ist möglich, dass der Randbereich 7 zwar breiter als der Randbereich 6 ist, aber noch nicht in den Verteilbereich der zweiten Schleuderscheibe hineinragt und sich ein Verteilen des Düngers in den Bereich 7 durch entsprechend angepasste Betriebsparameter der ersten Schleuderscheibe, beispielsweise hinsichtlich Schleuderscheibendrehzahl und/oder Auftreffpunkt des Düngers und/oder angepasste Benutzung einer Grenzstreuvorrichtung, verhindern lässt.

Nach dem Passieren der Wasserfläche 2, kann der Verteilvorgang wiederum derart angepasst werden, dass ein Randbereich der Breite A vom Dünger freibleibt. Nach der Umrundung der Fläche kann dann zu der Bearbeitung der Kernzone der landwirtschaftlichen Fläche übergegangen werden.

Die jeweiligen Betriebsparameter der Verteilmaschine zur Bearbeitung der Randbereiche der landwirtschaftlichen Fläche werden vor dem Bearbeitungsvorgang durch den Landwirt festgelegt und dann bei der Bearbeitung durch die Maschine entsprechend abgearbeitet oder direkt während der Feldarbeit durch den Landwirt durch Steuerbefehle eingestellt und auch während des Bearbeitungsvorganges in der Steuervorrichtung der landwirtschaftlichen Maschine gespeichert und können in erfindungsgemäßer Weise bei einem erneuten Anfahren der landwirtschaftlichen Fläche aufgerufen werden. Hierbei können gegebenenfalls auch geänderte Betriebsparameter, wie eine andere Düngersorte/ ein anderes Pflanzenschutzmittel, ein anderer Schleuderscheibentyp oder andere Windverhältnisse automatisiert berücksichtigt werden. Auch können die Daten auf andere Maschinen zu diesem Zweck übertragen werden. Die Art des auszubringenden Guts kann insbesondere in den jeweils gespeicherten Daten hinterlegt werden, so dass für verschiedene Güter verschiedene Bearbeitungskarten generiert bzw. hinterlegt werden. Somit kann dann bei einem erneuten Anfahren dieser landwirtschaftlichen Fläche je nach Art des auszubringenden Guts eine hierfür angepasste Bearbeitungskarte aufgerufen werden.

Überdies ist es in erfindungsgemäßer Weise möglich die Bearbeitungsparameter, welche beispielsweise bei der Bearbeitung von Randflächen mittels eines Düngerstreuers verwendet und/oder gespeichert wurden in vorteilhafter Weise bei der Bearbeitung des Feldes mit einer Feldspritze zu verwenden, um die Bearbeitung der Randflächen zu automatisieren.

So könnte beispielsweise auf Grund von Daten des Verteilprozesses beim Düngerstreuer, wie Düngerart, jeweilige Schleuderscheibenart, jeweilige Schleuderscheibendrehzahl, jeweiliger Aufgabepunkt des Düngers auf die Schleuderscheibe, Betriebszustand einer Grenzstreuvorrichtung, Winddaten, Geländeneigung usw., welche georeferenziert gespeichert werden, berechnet werden, wie groß der freibleibende Randbereich an der jeweiligen, durch die GPS-Position gekennzeichneten Stelle der landwirtschaftlichen Fläche zum Bearbeitungszeitpunkt war. Hieraus könnte für den anstehenden Bearbeitungsvorgang beispielsweise mit einer Feldspritze in Kombination mit den Parametern, welche für den aktuellen Bearbeitungsvorgang vorliegen, wie Winddaten und Sprüheigenschaften der vorliegenden Spritzdüsen eine Bearbeitungsvorschrift durch einen Algorithmus im Speicher der Steuervorrichtung der landwirtschaftlichen Maschine oder einer anderen Datenverarbeitungseinrichtung automatisiert erstellt und bei der Bearbeitung der landwirtschaftlichen Fläche verwendet werden. Natürlich ist es auch denkbar eine Umrechnungsvorschrift in entgegengesetzter Richtung automatisiert zu erstellen, also die Daten bei der Bearbeitung mit einer Feldspritze zu verwenden, um automatisiert eine Bearbeitungsvorschrift für einen Düngerstreuer zu generieren.

## Patentansprüche

1. Verfahren zum Betreiben einer Verteilmaschine mit ersten Verteilorganen zum Ausbringen von flüssigem oder granularem Gut in Kernzonen (5) einer landwirtschaftlichen Fläche und zweiten Verteilorganen zum angepassten Verteilen von landwirtschaftlichen Gut in Randgebieten einer landwirtschaftlichen Fläche, wobei die zweiten Verteilorgane ausgebildet sind in Kombination mit den ersten Verteilorganen oder separat betrieben zu werden, wobei die Verteilmaschine über ein Standortbestimmungssystem und eine Steuereinheit mit einem Speicher verfügt, wobei die Steuereinheit dazu ausgebildet ist, die ersten und zweiten Verteilorgane zur Verteilung von landwirtschaftlichem Gut anzusteuern und zu betreiben und wobei die Ansteuerung und der Betrieb der ersten und zweiten Verteilorgane ortsabhängig entsprechend einer in dem Speicher der Steuereinheit hinterlegten Bearbeitungskarte erfolgt;
**dadurch gekennzeichnet, dass**
ferner die Steuereinheit dazu ausgebildet ist, Betriebseinstellungen der ersten und zweiten Verteilorgane im Betrieb der Verteilmaschine georeferenziert abzuspeichern und bei einem erneuten Anfahren derselben landwirtschaftlichen Fläche diese gespeicherten Daten für den Betrieb der ersten und zweiten Verteilorgane aufzurufen und die ersten und zweiten Verteilorgane entsprechend der gespeicherten Daten anzusteuern und zu betreiben.

2. Verfahren nach Anspruch 1, **dadurch gekennzeichnet, dass** zudem durch die Steuereinheit die jeweilige Sorte des mittels der Verteilmaschine ausgebrachten Guts zusätzlich zu dem jeweiligen Betrieb der ersten und zweiten Verteilorgane gespeichert wird und bei einem erneuten Anfahren derselben landwirtschaftlichen Fläche zum Ausbringen desselben Guts eine Bearbeitung entsprechend des jeweils georeferenziert für dieses Gut gespeicherten Betriebs der ersten und zweiten Verteilorgane erfolgt.

3. Verfahren nach zumindest einem der Ansprüche 1 bis 2, **dadurch gekennzeichnet, dass** die gespeicherten und beim Bearbeiten der landwirtschaftlichen Fläche aufzurufenden Daten durch die Steuervorrichtung entsprechend geänderter Betriebsparameter der Verteilmaschine, wie geänderte Düngersorte oder geänderter Schleuderscheibentyp oder geänderte Sprühdüse, automatisiert mittels eines Algorithmus angepasst werden.

4. Verfahren nach zumindest einem der Ansprüche 1 bis 3, **dadurch gekennzeichnet, dass** das erste Verteilorgan eine Schleuderscheibe eines Schleuderstreuers ist und das zweite Verteilorgan ein Grenzstreuschirm.

5. Verfahren nach zumindest einem der Ansprüche 1 bis 3, **dadurch gekennzeichnet, dass** das erste Verteilorgan eine Spritzdüse einer Feldspritze ist und das zweite Verteilorgan eine spezielle Düse für den Betrieb in der Nähe von Feldgrenzen.

6. Verfahren nach zumindest einem der Ansprüche 1 bis 5, **dadurch gekennzeichnet, dass** die für einen Typ von Verteilmaschinen, beispielsweise Düngerstreuer, gespeicherten Informationen bezüglich der angepassten Benutzung von zweiten Verteilorganen in Randbereichen einer landwirtschaftlichen Fläche zur Benutzung bei einer landwirtschaftlichen Maschine anderen Typs, beispielsweise Feldspritzen, automatisiert mittels eines Algorithmus konvertiert werden.

## Claims

1. Method for operating a distribution machine having first distribution members for discharging liquid or granular material into core zones (5) of an agricultural area and second distribution members for the adapted distribution of agricultural material in edge regions of an agricultural area, wherein the second distribution members are designed to be operated in combination with the first distribution members or separately, wherein the distribution machine has a location-determining system and a control unit with a memory, wherein the control unit is designed to activate and to operate the first and second distribution members for distributing agricultural material, and wherein the first and second distribution members are activated and operated in a location-dependent manner in accordance with a cultivation map stored in the memory of the control unit;
**characterized in that**
the control unit is furthermore designed to save operating settings of the first and second distribution members in a geo-referenced manner during the operation of the distribution machine and, upon approaching the same agricultural area again, to retrieve said stored data for the operation of the first and second distribution members and to activate and to operate the first and second distribution members in accordance with the stored data.

2. Method according to Claim 1, **characterized in that** the respective type of material discharged by means of the distribution machine is also stored by the control unit in addition to the respective operation of the first and second distribution members and, when the same agricultural area is approached again, for the discharging of the same material cultivation takes place in accordance with the operation of the first and second distribution members stored in each case in a geo-referenced manner for said material.

3. Method according to at least either of Claims 1 and 2, **characterized in that** the data which is stored and is to be retrieved during the cultivation of the agricultural area are adapted by the control device in an automated manner by means of an algorithm in accordance with changed operating parameters of the distribution machine, such as changed type of fertilizer or changed type of centrifugal disc or changed spray nozzle.

4. Method according to at least one of Claims 1 to 3, **characterized in that** the first distribution member is a centrifugal disc of a centrifugal spreader and the second distribution member is a border spreading screen.

5. Method according to at least one of Claims 1 to 3, **characterized in that** the first distribution member is a spray nozzle of a field sprayer and the second distribution member is a special nozzle for operation in the vicinity of field boundaries.

6. Method according to at least one of Claims 1 to 5, **characterized in that** the information regarding the adapted use of second distribution members in edge regions of an agricultural area, said information being stored for one type of distribution machine, for example fertilizer spreader, is converted in an automated manner by means of an algorithm for use in a different type of agricultural machine, for example a field sprayer.

## Revendications

1. Procédé pour faire fonctionner une machine de répartition comprenant des premiers organes de répartition destinés à épandre un produit liquide ou granuleux dans des zones centrales (5) d'une surface agricole et des deuxièmes organes de répartition destinée à la répartition adaptée du produit agricole dans les régions de bordure d'une surface agricole, les deuxièmes organes de répartition étant configurés pour fonctionner en combinaison avec les premiers organes de répartition ou séparément de ceux-ci, la machine de séparation disposant d'un système de détermination de lieu et d'une unité de commande pourvue d'une mémoire, l'unité de commande étant configurée pour commander et pour faire fonctionner les premiers et deuxièmes organes de répartition en vue de répartir le produit agricole et la commande et le fonctionnement des premiers et des deuxièmes organes de répartition s'effectuant en fonction du lieu conformément à une carte de traitement stockée dans la mémoire de l'unité de commande ;
**caractérisé en ce que**
l'unité de commande est en outre configurée pour mémoriser avec géoréférencement les réglages opérationnels des premiers et deuxièmes organes de répartition au cours du fonctionnement de la machine de répartition et, lors d'un nouveau parcours de la même surface agricole, invoquer ces données mémorisées pour le fonctionnement des premiers et deuxièmes organes de répartition et commander et faire fonctionner les premiers et deuxièmes organes de répartition conformément aux données mémorisées.

2. Procédé selon la revendication 1, **caractérisé en ce que** le type respectif du produit épandu au moyen de la machine à répartir est en outre mémorisé par l'unité de commande en plus du fonctionnement respectif des premiers et deuxièmes organes de répartition et, lors d'un nouveau parcours de la même surface agricole en vue d'épandre le même produit, un traitement est effectué conformément au fonctionnement des premiers et deuxièmes organes de répartition respectivement géoréférencé pour ce produit.

3. Procédé selon au moins l'une des revendications 1 à 2, **caractérisé en ce que** les données mémorisées et à invoquer lors du traitement de la surface agricole sont adaptées de manière automatisée au moyen d'un algorithme par le dispositif de commande conformément aux paramètres de fonctionnement modifiés de la machine de répartition, tels qu'une sorte d'engrais modifié ou un type de disque centrifuge modifié ou une buse d'arrosage modifiée.

4. Procédé selon au moins l'une des revendications 1 à 3, **caractérisé en ce que** le premier organe de répartition est un disque centrifuge d'une épandeuse centrifuge et le deuxième organe de répartition est un déflecteur de bordure.

5. Procédé selon au moins l'une des revendications 1 à 3, **caractérisé en ce que** le premier organe de répartition est une buse de pulvérisation d'un pulvérisateur à cultures et le deuxième organe de répartition est une buse spéciale pour le fonctionnement à proximité des limites du champ.

6. Procédé selon au moins l'une des revendications 1 à 5, **caractérisé en ce que** les informations concernant l'utilisation adaptée de deuxièmes organes de répartition dans les zones de bordure d'une surface agricole, qui sont mémorisées pour un type de machine de répartition, par exemple une épandeuse d'engrais, sont converties de manière automatisée au moyen d'un algorithme en vue d'une utilisation avec une machine agricole d'un autre type, par exemple un pulvérisateur à cultures.
